# EUROPEAN PATENT APPLICATION

(11) **EP 4 746 378 A1**
(43) Date of publication of application: **20.05.2026**
(21) Application number: 24843361.7
(22) Date of filing: 01.07.2024
(51) Int. Cl.: H04L 67/06, H04L 9/40, H04L 9/00, H04W 76/14

(54) **ELECTRONIC DEVICE AND METHOD FOR SHARING FILE**

(30) Priority: 19.07.2023 KR 20230093779; 01.09.2023 KR 20230115904
(71) Applicant: Samsung Electronics Co., Ltd., Suwon-si, Gyeonggi-do 16677 (KR)
(72) Inventor: YIM, Jeeeun, Suwon-si, Gyeonggi-do 16677 (KR); KIM, Yongjoon, Suwon-si, Gyeonggi-do 16677 (KR); HONG, Eunseok, Suwon-si, Gyeonggi-do 16677 (KR); SEO, Hyeonseob, Suwon-si, Gyeonggi-do 16677 (KR); JANG, Geunseok, Suwon-si, Gyeonggi-do 16677 (KR); JANG, Seungmin, Suwon-si, Gyeonggi-do 16677 (KR); CHOI, Eunha, Suwon-si, Gyeonggi-do 16677 (KR)
(74) Representative: HGF
(86) International application number: PCT/KR2024/009210
(87) International publication number: WO 2025/018641

(57) **Abstract**

Provided are an electronic device and method for sharing a file. The method by which a first electronic device shares a file comprises: a step for selecting a second electronic device registered in a server for a security sharing service; a step for identifying whether a network state and a system time setting of the second electronic device satisfy a preset criterion for the security sharing service; a step for encoding the file; a step for transmitting the encoded file to the second electronic device; a step (430) for generating a security channel for generating a blockchain for the security sharing service with the second electronic device as the preset criterion is satisfied; a step for generating transaction information related to the encoded file transmitted to the second electronic device; and a step for recording the generated transaction information in a blockchain ledger of the blockchain through the security channel.

## Description

### [Technical Field]

The disclosure relates to an electronic device and a method for sharing files, and more particularly, to an electronic device and a method for sharing files through a blockchain network.

### [Background Art]

Blockchain networks are networks that are distinguished from centralized networks in which decisions are made by central servers, and are expressed as decentralized networks. A blockchain network may refer to a network in which decisions are made according to a consensus algorithm of nodes participating therein.

Ledgers existing in blockchain networks may be stored in nodes participating in the blockchain networks, respectively. Ledgers existing in the blockchain networks may be refined according to the consensus algorithms of the nodes participating in the blockchain networks.

Blockchain is technology for maintaining security and integrity in distributed network environments without centralized servers. As an example of methods for authenticating users based on blockchain, there is a method for issuing key pairs in a private blockchain network and authenticating users using the key pairs.

### [Disclosure of Invention]

### [Solution to Problem]

An embodiment of the disclosure may provide a method for a first electronic device to share a file with a second electronic device, the method including: selecting the second electronic device registered at a server for a secure sharing service; identifying whether a network state and a system time setting of the second electronic device satisfy a predetermined criterion for the secure sharing service; encrypting the file; transmitting the encrypted file to the second electronic device; generating a security channel for generating a blockchain for the secure sharing service with the second electronic device in response to the predetermined criterion being satisfied; generating transaction information related to the encrypted file transmitted to the second electronic device; and recording the generated transaction information on a blockchain ledger of the blockchain through the security channel.

In addition, an embodiment of the disclosure may provide a first electronic device including: a first communication interface; a second communication interface; a memory configured to store instructions; and a processor, wherein, when being executed by the processor, the instructions cause the first electronic device to: select a second electronic device registered at a server 130 for a secure sharing service; identify whether a network state and a system time setting of the second electronic device satisfy a predetermined criterion for the secure sharing service; encrypt a file; transmit the encrypted file to the second electronic device; generate a security channel for generating a blockchain for the secure sharing service with the second electronic device in response to the predetermined criterion being satisfied; generate transaction information related to the encrypted file transmitted to the second electronic device; and record the generated transaction information on a blockchain ledger of the blockchain through the security channel.

In addition, an embodiment of the disclosure may provide a computer-readable recording medium recording a program to execute: selecting a second electronic device registered at a server for a secure sharing service; identifying whether a network state and a system time setting of the second electronic device satisfy a predetermined criterion for the secure sharing service; encrypting the file; transmitting the encrypted file to the second electronic device; generating a security channel for generating a blockchain for the secure sharing service with the second electronic device in response to the predetermined criterion being satisfied; generating transaction information related to the encrypted file transmitted to the second electronic device; and recording the generated transaction information on a blockchain ledger of the blockchain through the security channel.

An embodiment of the disclosure may provide a method for a first electronic device to share a file with a second electronic device, the method including: selecting the second electronic device registered at a server for a secure sharing service as a secure sharing function of a file sharing application of the first electronic device is activated; identifying whether a network state and a system time setting of the second electronic device satisfy a predetermined criterion for the secure sharing service; connecting communication with the second electronic device through a D2D communication network; encrypting the file; transmitting the encrypted file to the second electronic device through the D2D communication network; generating a security channel for generating a blockchain for the secure sharing service with the second electronic device through the D2D communication in response to the predetermined criterion being satisfied; generating transaction information related to the encrypted file transmitted to the second electronic device; and recording the generated transaction information on a blockchain ledger of the blockchain through the security channel.

### [Brief Description of Drawings]

FIG. 1 is a schematic view of a file sharing system using a blockchain according to an embodiment of the disclosure.
FIG. 2 is a block diagram of an electronic device according to an embodiment.
FIG. 3 is a view to explain a blockchain network according to an embodiment.
FIG. 4 is a flowchart of a method for sharing and managing files through a blockchain network by a first electronic device and a second electronic device according to an embodiment of the disclosure.
FIG. 5 is a flowchart illustrating a method by which the first electronic device shares a file with the second electronic device registered for the secure sharing service through the blockchain network according to an embodiment.
FIG. 6 is a view illustrating an example of the first electronic device generating a security channel through D2D communication and transmitting a file to the second electronic device and synchronizing a block chain ledger according to an embodiment of the disclosure.
FIG. 7 is a view illustrating an example of the first electronic device generating a security channel through D2D communication, transmitting a file to the second electronic device, and synchronizing the block chain ledger after disconnecting D2D communication connection according to an embodiment of the disclosure.
FIG. 8 is a view illustrating an example of the first electronic device transmitting a file to the second electronic device through D2D communication, generating a security channel after disconnecting D2D communication connection, and synchronizing the block chain ledger according to an embodiment of the disclosure.
FIG. 9 is a view illustrating an example of an execution screen in a normal sharing mode of a file sharing application which is displayed on a screen of the first electronic device according to an embodiment of the disclosure.
FIG. 10 is a view illustrating an example of an execution screen in a secure sharing mode of the file sharing application which is displayed on the screen of the first electronic device according to an embodiment of the disclosure.
FIG. 11 is a view illustrating changes in the icon and text corresponding to the second electronic device displayed on the screen of the first electronic device according to a state of a sharing procedure as the procedures for secure sharing of files between the first electronic device and the second electronic device are performed according to an embodiment of the disclosure.
FIG. 12 is a view illustrating an example of an execution screen of a file sharing application displayed on the screen of the second electronic device as the procedures for secure sharing of files between the first electronic device and the second electronic device are performed according to an embodiment of the disclosure.
FIG. 13 is a block diagram of an electronic device in a network environment according to various embodiments.

### [Mode for the Invention]

Hereinafter, various embodiments of the disclosure will be described in detail with reference to the accompanying drawings so that a person skilled in the art can easily embody. However, the disclosure may be implemented in different forms and is not limited to the embodiments set forth herein. In addition, in the drawings, parts having nothing to do with the descriptions are omitted for the clear description of the disclosure, and throughout the specification, the same or like reference numerals are used for the same or like elements.

The terms used in the disclosure are described as general terms currently used considering the functions mentioned in the disclosure, but may refer to various other terms according to the intent of those skilled in the art, precedent, the emergence of new technologies. Accordingly, the terms used in the disclosure should not be interpreted solely based on their names and should be interpreted based on the meanings of the terms and the whole context of the disclosure.

In addition, such terms as "1st" and "2nd," or "first" and "second" may be used to explain various components, but the components should not be limited by such terms. These terms may be used for the purpose of distinguishing one component from other components.

Throughout the specification, it is to be understood that if an element is referred to as "connected with/to" another element, it means that the element may be "directly connected" with another element or may be "electrically connected" with another element via an intervening element therebetween. It will be further understood that when a certain portion is referred to as "including" a certain element, it means that the certain portion does not exclude other components and may further include other components unless the context clearly indicates otherwise.

The phrase "in an embodiment" used in the disclosure does not necessarily indicate the same embodiment.

An embodiment of the disclosure may be represented by functional block configurations and various processing steps. Some or all of the functional blocks may be implemented by various numbers of hardware and/or software configurations that perform specific functions. For example, the functional blocks of the disclosure may be implemented by one or more microprocessors or may be implemented by circuit configurations for predetermined functions. In addition, for example, the functional blocks of the disclosure may be implemented by various programming or scripting languages. The functional blocks may be implemented by an algorithm that is executed in one or more processors. The disclosure may employ related-art technologies for electronic configuration, signal processing, and/or data processing. Such terms "mechanism", "element", "means", and "configuration" may be broadly used and are not limited to mechanical and physical configurations.

In addition, connecting lines or connecting members among components shown in the drawings are only examples of functional connection and/or physical or circuitry connections. In an actual device, connections among components may be represented by a variety of alternative or additional functional connection, physical connection, or circuit connections.

Hereinafter, the disclosure will be described in detail with reference to the accompanying drawings.

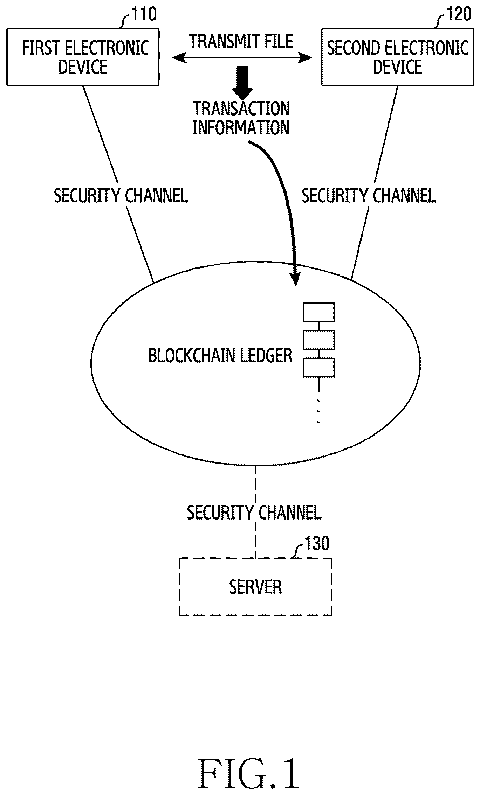

FIG. 1 is a schematic view of a file sharing system using a blockchain according to an embodiment of the disclosure.

Referring to FIG. 1, the file sharing system according to an embodiment may include a first electronic device 110, a second electronic device 120, and a server 130.

According to an embodiment, the first electronic device 100 may be communicatively connected with the second electronic device 120, and the first electronic device 110 may transmit a file to be shared to the second electronic device 120. The first electronic device 110 and the second electronic device 120 may be electronic devices that are already registered at the server 130 which provides a secure sharing service. The secure sharing service may be a service that provides security of files shared between electronic devices by using a blockchain technology, and manages authority to use files. For example, the first electronic device 110 and the second electronic device 120 may be communicatively connected with each other using device to device (D2D) communication, and files may be transmitted between the first electronic device 110 and the second electronic device 120 through D2D communication.

According to an embodiment, the first electronic device 100 may generate a security channel for a blockchain network with the second electronic device 120 in order to record information related to file transmission on a blockchain ledger within the blockchain network. For example, the first electronic device 110 may generate the security channel for the blockchain network with the second electronic device 120 by exchanging data for generating the security channel through D2D communication between the first electronic device 110 and the second electronic device 120. In addition, for example, the first electronic device 100 may generate the security channel for the blockchain network along with the second electronic device 120 and the server 130.

According to an embodiment, the first electronic device 110 may record transaction information related to transmission of a file generated with the electronic device 120 on the blockchain ledger within the blockchain network. Accordingly, the first electronic device 110 and the second electronic device 120 may mange the security of files transmitted between the first electronic device 110 and the second electronic device 120 and the authority to use files by using the blockchain network.

According to an embodiment, the first electronic device 100, which is a device capable of transmitting and receiving data through a network, may be, for example, a smartphone, a tablet personal computer (PC), a mobile phone, a personal digital assistant (PDA), a laptop, a media player, a global positioning system (GPS) device, an e-book terminal, a digital broadcasting terminal, a navigation device, a digital camera, a home appliance or other mobile/non-mobile computing devices, but is not limited thereto.

According to an embodiment, the second electronic device 120, which is a device capable of transmitting and receiving data through a network, may be, for example, a smartphone, a tablet PC, a mobile phone, a PDA, a laptop, a media player, a GPS device, an e-book terminal, a digital broadcasting terminal, a navigation device, a digital camera, a home appliance or other mobile/non-mobile computing devices, but is not limited thereto.

According to an embodiment, a file shared between the first electronic device 110 and the second electronic device 120 may be content data. For example, the file may be an e-book, a document, an image, an audio, a video, an application, or content data of a combination thereof, but is not limited thereto.

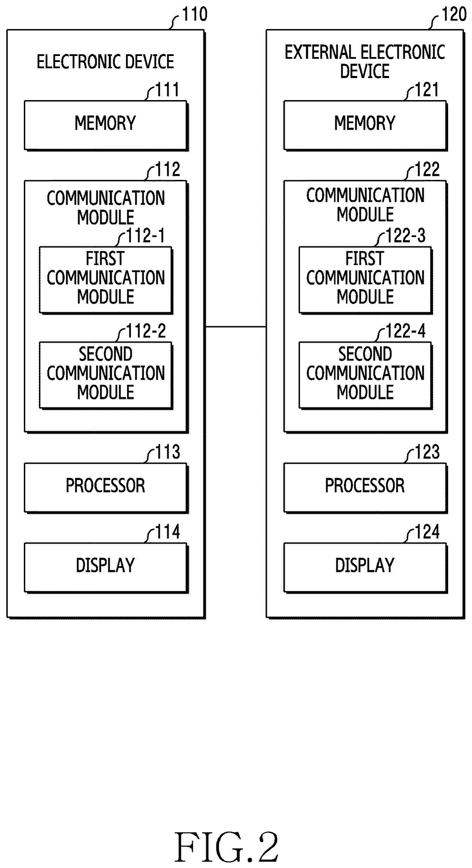

FIG. 2 is a block diagram of an electronic device according to an embodiment.

Referring to FIG. 2, the first electronic device 110 may include a memory 111, a communication module 112, a processor 1130, and a display 114, or a combination thereof. According to an embodiment, a memory 121, a communication module 122, a processor 123, and a display 124 of the second electronic device 120 may correspond to the memory 111, the communication module 112, the processor 113, and the display 114 of the first electronic device 110, respectively, and may perform the same functions. In an embodiment, the first electronic device 110 and the second electronic device 120 may include additional components in addition to the components illustrated in FIG. 1, or may omit at least one of the components illustrated in FIG. 1.

According to an embodiment, the memory 111 may store instructions that process data for performing operations of the first electronic device 110 or control the components of the first electronic device 110 when being executed by the processor 113. The memory 111 may include a secure area or a separate secure storage medium (for example, a secure memory area (for example, a trust zone) accessible only through a secure OS).

According to an embodiment, the communication module 112 may be configured to be connected with an external device to exchange files therewith. The communication module 112 may include a first communication module 112-1 to perform short-range communication, and a second communication module 112-2 to perform communication with the server 130. The first communication module 112-1 is a module for D2D communication, and for example, may be a module for Bluetooth (for example, BLE) communication and WiFi (for example, WiFi-direct, WiFi-aware) communication. In addition, the second communication module 112-2 may be a module for wireless communication, not short-range communication. According to an embodiment, the communication module 112 may exchange files with the second electronic device 120. According to an embodiment, the communication module 112 may communicate with various external servers. For example, the first electronic device 110 may transmit a file to an external server and may receive a response from the external server by using the communication module 112.

According to an embodiment, the processor 113 may be electrically or operatively connected with the memory 111, the communication module 112, and the display 114. According to an embodiment, the processor 113 may execute computation or data processing related to control of at least one other component of the first electronic device 110 and/or communication by using instructions stored in the memory 111. According to an embodiment, the processor 113 may include at least one of a central processing unit (CPU), a graphics processing unit (GPU), a micro controller unit (MCU), a sensor hub, a supplementary processor, a communication processor, an application processor, an application specific integrated circuit (ASIC), field programmable gate arrays (FPGA), and may have a plurality of cores.

According to an embodiment, the display 114 may display various contents (for example, texts, images, videos, icons, and/or symbols, etc.).

According to an embodiment, the processor 113 may execute instructions included in the memory 111 to generate a key pair in an asymmetric encryption method (for example, a public-key cryptography). In an embodiment, the memory 111 may store a generated private key. In an embodiment, the memory 111 in which the generated key pair is stored may refer to a security memory that provides a security environment.

According to an embodiment, the processor 113 may generate a blockchain address by using an encryption key (for example, a private ley). For example, the processor 113 may generate a public key by a predetermined algorithm using a private key, and may generate an address to be used in the blockchain by using a hash function from the generated public key. The processor 113 according to an embodiment may determine at least one second electronic device 120 to share a file therewith. For example, a user of the second electronic device 120 with which a file of the first electronic device 110 is shared may be determined by a user of the first electronic device 110.

According to an embodiment, the processor 113 may transmit a file to the second electronic device 120 with which the file is to be shared by using the communication module 112.

In an embodiment, the processor 113 may generate a blockchain network to share the file with the second electronic device 120. For example, the processor 113 may generate a blockchain network including the second electronic device 120 as a node, based on a response message received from the second electronic device 120 in response to an invitation message from the user of the first electronic device 110. In an embodiment, the processor 113 may store information on the generated blockchain network in the server 130 by using the communication module 112.

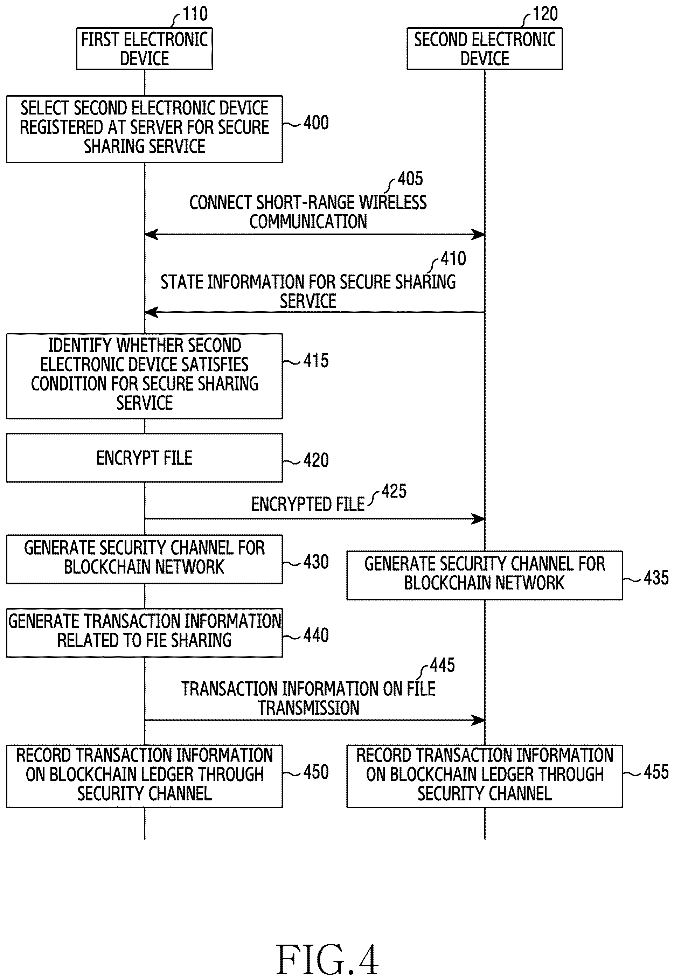

According to an embodiment, the processor 113 may perform operations of the first electronic device 110 in FIGS. 4 to 12, which will be described below.

According to an embodiment, the processor 113 may select the second electronic device 120 registered at the server 130 for the secure sharing service of the first electronic device 110. According to an embodiment, the processor 113 may connect the first electronic device 110 to the second electronic device 120 through short-range wireless communication. According to an embodiment, the processor 113 may receive state information for the secure sharing service from the second electronic device 120. According to an embodiment, the processor 113 may identify whether the second electronic device 120 satisfies a condition for the secure sharing service. According to an embodiment, the processor 113 may encrypt the file to share with the second electronic device 120. According to an embodiment, the processor 113 may transmit the encrypted file to the second electronic device 120. According to an embodiment, the processor 113 may generate a security channel for the blockchain network with the second electronic device 120. According to an embodiment, the processor 113 may generate transaction information related to fire sharing. According to an embodiment, the processor 113 may transmit the transaction information related to the file sharing to the second electronic device 120. According to an embodiment, the processor 113 may record the transaction information on the blockchain ledger through the security channel.

According to an embodiment, the processor 113 may register the first electronic device 110 at the server 130 for the secure sharing service. According to an embodiment, the processor 113 may activate the secure sharing function. According to an embodiment, the processor 113 may transmit at least one inquiry message containing the condition for the secure sharing service to the second electronic device 120, and, according to an embodiment, the processor 113 may receive at least one response message related to whether the condition for the secure sharing service is satisfied from the second electronic device 120. According to an embodiment, the processor 113 may identify whether the second electronic device 120 satisfies the condition for the secure sharing service. According to an embodiment, the processor 113 may encrypt the file. According to an embodiment, the processor 113 may transmit the encrypted file to the second electronic device 120. According to an embodiment, the processor 113 may generate transaction information. According to an embodiment, the processor 113 may provide the transaction information to the second electronic device 120. According to an embodiment, the processor 113 may identify whether there exists a security channel. According to an embodiment, the processor 113 may generate a security channel with the second electronic device 120. According to an embodiment, the processor 113 may synchronize the blockchain ledger.

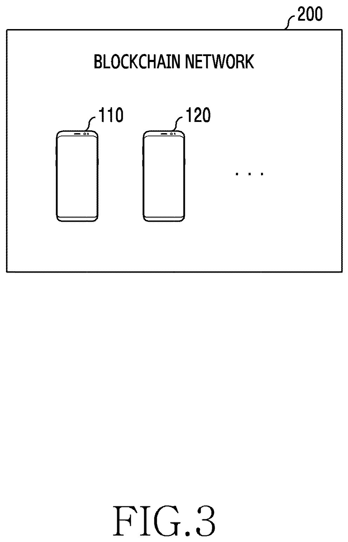

FIG. 3 is a view to explain a blockchain network according to an embodiment of the disclosure.

Referring to FIG. 3, a plurality of electronic devices 110, 120 may constitute a blockchain network 200. According to the disclosure, it is illustrated that two electronic devices constitute the blockchain network 200 for the convenience of explanation, but this should not be considered as limiting. According to an embodiment, the first electronic device 100 may establish the blockchain network 200 with at least one external electronic device for sharing files. For example, the first electronic device 100 may establish the blockchain network 200 with the second electronic device 120 as a node. According to an embodiment, the first electronic device 110 may establish a plurality of blockchain networks to share files. For example, a first blockchain network which includes the first electronic device 110 and other external electronic devices (not shown) and a second blockchain network which includes the first electronic device 110 and external electronic devices 120, 130 may be established.

According to an embodiment, the first electronic device 110 may generate a plurality of public keys and private keys corresponding to the public kyes, based on a root seed. According to an embodiment, the first electronic device 110 may generate a plurality of public keys and private keys corresponding to a plurality of blockchain networks including the first electronic device 110 as a node, respectively. Blockchain networks corresponding to the plurality of public keys, respectively, may be established based on the plurality of public keys.

In the disclosure, the blockchain network 200 generated to share files may be established by a secure sharing channel. Each secure sharing channel may be identified according to electronic devices (users) included in the corresponding secure sharing channel. For example, when electronic devices constituting the blockchain network 200 are different, different secure sharing channels may be identified, but this should not be considered as limiting.

According to an embodiment, the blockchain network 200 may include a blockchain ledger which is based on the corresponding blockchain network. That is, there may exist blockchain ledgers corresponding to the blockchain networks, respectively. In an embodiment, the blockchain ledger may be comprised of a block ledger in which transaction information is stored, and world state data in which values changed by executing a transaction are stored in a key-value format. The world state data may be, for example, data stored in a world state which is a database used in Hyperledger Fabric, but is not limited thereto.

The world state is a kind of database used in Hyperledger Fabric, and may store final values changed by executing a transaction in a key-value format. Accordingly, to identify final values by execution of a transaction in the blockchain network 200, the world state data has only to be identified. The world state data stored in the world state may appear as the same value across the electronic devices constituting the blockchain network. That is, the world state data may have the feature of a global variable within the blockchain network.

In an embodiment, the block may be comprised of transactions containing information for performing a smart contract. Accordingly, the blocks of the blockchain ledger have a chain-like formation and may store block data in the block ledger. According to an embodiment, all of the blockchain nodes included in the blockchain network 200 may own the same blockchain ledger. Accordingly, when different blockchain ledgers are found, the blockchain nodes may doubt reliability and validity of the corresponding block.

The block ledger may include a block header and transaction data. According to an embodiment, the block header may include, for example, at least one of a hash value in a header and data area, a hash value of a previous block, a height value of the block, a hash value of world state data after performing a transaction included in the block, a public key of a block generator, a value autographing a hash with a private key of the block generator, an attestation key certification chain or a value autographing a hash value with an attestation key, but is not limited thereto.

The block data may include at least one of a hash value of at least part of transaction data, version information of the smart contract, a smart contract ID, a smart contract function ID, smart contract data which is a factor value needed for the smart contract function, a nonce value which is a transaction generation number of a transaction generator, a public key of the transaction generator, a value autographing a hash value with a private key of the transaction generator, an attestation key certification chain or a value autographing a hash value with an attestation key, but is not limited thereto.

FIG. 4 is a flowchart of a method by which the first electronic device and the second electronic device share and manage a file through a blockchain network according to an embodiment of the disclosure.

In operation 400, the first electronic device 110 may select the second electronic device 120 registered at the server 130 for the secure sharing service. The first electronic device 110 may display a list of electronic devices that are able to receive a file transmitted by the first electronic device 110 on the screen of the first electronic device 110, and may select the second electronic device 120 from the list of electronic devices based on a user input.

According to an embodiment, the list of electronic devices may include identification values of the electronic devices which are already registered at the server 130 providing the secure sharing service. For example, private numbers may be issued for the electronic devices registered at the server 130 providing the secure sharing service from the server 130, and phone numbers and private numbers of the electronic devices may be registered at the server 130.

According to an embodiment, when the first electronic device 110 activates the secure sharing function, the list of electronic devices registered at the server 130 may be displayed on the display of the first electronic device 110. For example, the first electronic device 110 may execute an application for sharing files, and may receive a user input of selecting an object for activating the secure sharing function on the screen of the application. In response to the user input, the first electronic device 110 may display the list of electronic devices registered at the server 130 providing the secure sharing service.

According to an embodiment, for example, the first electronic device 110 may search nearby electronic devices through Bluetooth communication (for example, BLE), and may display the list of electronic devices based on response packets received from the nearby electronic devices. In this case, search request packets that the first electronic device 110 broadcasts to search the nearby electronic devices may include data for inquiring about whether the electronic devices are registered at the server 130.

In operation 405, the first electronic device 110 may be connected with the second electronic device 120 through short-range wireless communication. For example, the first electronic device 110 may be connected with the second electronic device 120 through Bluetooth communication (for example, BLE communication). Alternatively, for example, the first electronic device may be communicatively connected with the second electronic device 120 through WiFi communication (for example, WiFi-direct, WiFi-aware).

In operation 410, the first electronic device 110 may receive state information for the secure sharing service from the second electronic device 120. According to an embodiment, the first electronic device 110 may receive information on a network state of the second electronic device 120 and a time setting of the second electronic device 120 from the second electronic device 120. According to an embodiment, the information on the network state of the second electronic device 120 may be information indicating whether a communication function of a designated network is activated to enable the second electronic device 120 to transmit and receive data. For example, since a designated network function should be activated to generate a security channel or update a blockchain ledger, the first electronic device 110 may receive the information on the network state of the second electronic device 120 from the second electronic device 120.

According to an embodiment, the information on the time setting of the second electronic device 120 may be information related to whether a time setting is performed to synchronize system time of the second electronic device 120 with reference time (for example, standard time). For example, to synchronize a transmission time of a file between the first electronic device 110 and the second electronic device to update the blockchain ledger, the first electronic device 110 may receive the information on the time setting of the second electronic device 120 from the second electronic device 120.

In operation 415, the first electronic device 110 may identify whether the second electronic device 120 satisfies the condition for the secure sharing service. The first electronic device 110 may identify whether the second electronic device 120 satisfies the condition for sharing files through the secure sharing service, based on the state information for the secure sharing service received from the second electronic device 120. For example, the first electronic device 110 may identify whether the communication function of the designated network is activated to enable the second electronic device 120 to transmit and receive data. For example, the first electronic device 110 may identify whether a time setting is performed to synchronize the time of the second electronic device 120 with the reference time.

In operation 420, the first electronic device 110 may encrypt a file to share with the second electronic device 120. The first electronic device 110 may encrypt the file to transmit to the second electronic device 120 by using a predetermined encryption key. For example, the first electronic device 110 may encrypt the file by using a symmetric key pre-designated by the first electronic device 110 and the second electronic device.

According to an embodiment, the first electronic device 110 may generate detailed information on the file to share. The detailed information on the file to share may include, for example, at least one of an effective period of the file to share, an encryption file list, a secure sharing ID, a mime type of the file, a file key, a file name, a thumbnail file key or a thumbnail file name.

In operation 425, the first electronic device 110 may transmit the encrypted file to the second electronic device 120. The first electronic device 110 may transmit the encrypted file to the second electronic device 120 through short-range communication connected in operation 405, but this should not be considered as limiting. The encrypted file may be stored in the first electronic device 110 and the second electronic device 120, respectively.

In operations 430 and 435, the first electronic device 110 and the second electronic device 120 may generate a security channel for the blockchain network.

According to an embodiment, the first electronic device 110 may exchange information necessary for generating the security channel with the second electronic device 120 through short-range communication, thereby generating the security channel for the blockchain network. The first electronic device 110 may request the second electronic device 120 to generate the security channel, and may exchange information for generating the security channel with the second electronic device 120. For example, the first electronic device 110 may request generation of the security channel by using a private number of the second electronic device 120, may update device information of the second electronic device 120 and may wait for generation of the security channel, and the second electronic device 120 may update device information of the first electronic device 110 and may wait for generation of the security channel.

According to an embodiment, when the first electronic device 110 and the second electronic device 120 exchange information necessary for generating the security channel through D2D communication, at least one certification procedure for an invitation request for generating the security channel, invitation acceptance, and validity of a host may be omitted. For example, since the security channel may be established through message exchange between the first electronic device 110 and the second electronic device 120 through D2D communication, encryption and autographing for data for channel generation, data for invitation, and data for invitation acceptance may be omitted. For example, the first electronic device 100 may generate a Root Seed based on Mnemonic Hash, may generate a public key based on HdPath, and may transmit invitation information to the second electronic device 120, but a procedure for autographing invitation information with a private key and a procedure for autographing invitation information with an attestation key may be omitted. For example, the second electronic device 120 may generate data for invitation acceptance, but a procedure of validating the invitation information by identifying the autography with the attestation key and identifying the autography with the public key, and a procedure for autographing invitation acceptance data may be omitted. For example, the first electronic device 110 may receive an invitation acceptance message, and a procedure for validating the invitation acceptance message by identifying the autography with the attestation key and identifying the autography with the public key may be omitted. In addition, for example, since the first electronic device 110 and the second electronic device 120 exchange data through D2D communication that is mutually trusted, data exchanged between the first electronic device 110 and the second electronic device 120 through D2D communication may not be encrypted.

According to an embodiment, the first electronic device 110 which receives the invitation acceptance message may provide a genesis transaction to the second electronic device 120, and the block chain and the security channel may be formed between the first electronic device 110 and the second electronic device 120 for secure sharing. Accordingly, a procedure for the genesis transaction may be swiftly and simply performed to generate the security channel and add members between the first electronic device 110 and the second electronic device 120.

According to an embodiment, the genesis transaction for generating the security channel and adding members may be validated by the first electronic device 110 and/or the second electronic device 120 through the server 130, but this should not be considered as limiting.

According to an embodiment, the address of the generated security channel may be registered at the server 130, but this should not be considered as limiting. When the server 130 does not involve in the secure sharing service through the blockchain network, the process of registering the address of the generated security channel at the server 130 may be omitted.

According to an embodiment, after the short-range communication connection between the first electronic device 110 and the second electronic device 120 is terminated, the first electronic device 110 may generate the security channel for the blockchain network with the second electronic device 120. In this case, the first electronic device 110 may exchange the information for generating the security channel with the second electronic device 120 through the server 130, thereby generating the security channel for the blockchain network. The first electronic device 110 may request the second electronic device 120 to generate the security channel, and may exchange information for generating the security channel with the second electronic device 120. For example, the first electronic device 110 may request generation of the security channel by using the private number of the second electronic device 120, may update the device information of the second electronic device 120, and may wait for generation of the security channel, and the second electronic device 120 may update the device information of the first electronic device 110 and may wait for generation of the security channel. According to an embodiment, when the first electronic device 110 and the second electronic device 120 exchange information necessary for generating the security channel through the server 130, at least one certification procedure for an invitation request for generating the security channel, invitation acceptance, and validity of a host may be performed. For example, encryption and autographing for data for channel generation, data for invitation, and data for invitation acceptance may be performed. For example, the first electronic device 100 may generate a Root Seed based on Mnemonic Hash, may generate a public key based on HdPath, and may transmit invitation information to the second electronic device 120, and in this case, a procedure for autographing invitation information with a private key and a procedure for autographing invitation information with an attestation key may be performed. In addition, for example, the second electronic device 120 may generate data for invitation acceptance, and, to achieve this, a procedure of validating the invitation information by identifying the autography with the attestation key and identifying the autography with the public key, and a procedure for autographing invitation acceptance data may be performed. In addition, for example, the first electronic device 110 may receive an invitation acceptance message, and may perform a procedure for validating the invitation acceptance message by identifying the autography with the attestation key and identifying the autography with the public key. In addition, for example, since the first electronic device 110 and the second electronic device 120 exchange data through the server 130, data exchanged between the first electronic device 110 and the second electronic device 120 through the server 130 may be encrypted. In addition, according to an embodiment, the address of the generated security channel may be registered at the server 130, and a genesis transaction for generating the security channel and adding members may be validated through the server 130.

In operation 440, the first electronic device 110 may generate transaction information on file sharing. According to an embodiment, the first electronic device 110 may generate transaction information including detailed information on file sharing. For example, to generate transaction information containing detailed information on file sharing after the first electronic device 100 transmits a file to the second electronic device 120, mapping of file information and unique keys which are necessary for synchronizing the blockchain ledger may be updated in the first electronic device 110 and the second electronic device 120, respectively. In this case, the first electronic device 110 which provides the file to be shared may set the authority to read, delete, and modify the file, and may set an effective period to access the file, thereby generating transaction information.

For example, information for synchronizing the blockchain ledger may be shared and updated by the first electronic device 110 and the second electronic device 120. For example, the first electronic device 110 may generate a message containing the private number, sharing expiration date, and file information of the first electronic device 110, and may transmit the message to the second electronic device 120. For example, the second electronic device 120 may update information in the second electronic device 120 based on the received message, and may transmit a response message to the first electronic device 110. For example, the first electronic device 110 and the second electronic device 120 may exchange messages in formats as shown in the following <Table 1>:

**[Table 1]**

| Message | Field | Description |
|---|---|---|
| PrivacyRequest | SenderPrivateNumber | Private number of the sender |
| | ExpirationDate | Expiration date |
| | EncryptFiles | Encrypted file list |
| EncryptFiles | PrivacyShareId | Secure sharing ID |
| | MimeType | Mime type of the file |
| | FileKey | File key |
| | FileName | File name |
| | ThumbnailKey | Thumbnail file key |
| | ThumbnailName | Thumbnail file name |

The transaction information may include, for example, at least one of the private number of the first electronic device 110, an effective period (or an expiration date) of the file to share, an identification value of the encrypted file, a secure sharing ID, a mime type of the file, an identification value of the file for decrypting the encrypted file, a file key, a file name, a thumbnail file key or a thumbnail file name, but is not limited thereto. In addition, for example, the file key or the thumbnail file key may be generated and managed separately from the transaction information.

In operation 445, the first electronic device 110 may transmit the transaction information on the file transmission to the second electronic device 120. The first electronic device 110 may provide the transaction information to the second electronic device 120 through D2D communication. Alternatively, the first electronic device 110 may provide the transaction information to the second electronic device 120 through the security channel. The transaction information provided to the second electronic device 120 may be validated by the second electronic device 120.

In operations 450 and 455, the first electronic device 110 and the second electronic device 120 may record the transaction information on the blockchain ledger through the security channel. When the transaction information is validated by the second electronic device 120, the first electronic device 110 and the second electronic device 120 may synchronize the block including the transaction information. The first electronic device 110 and the second electronic device 120 may include the block including the transaction information in the blockchain ledger within the blockchain network, respectively.

According to an embodiment, when the transaction information is normally generated, the transaction information may be data for recording contents of the transaction on the blockchain ledger. For example, the transaction information may include data indicating a history of having transmitted files between accounts within the blockchain network. The transaction may refer to an action that causes changes in the contents of the blockchain ledger. For example, transaction information for which autography is normally completed may be recorded on the blockchain ledger, and transaction information for which autography is not normally completed may not be recorded on the ledger. For example, it may be monitored whether the transaction information is recorded on the block by the transaction through the transaction ID. For example, the transaction information may be recorded on the blockchain ledger by using a smart contract.

In an embodiment, the blockchain ledger may be data in a chain format where a block including transaction information on at least one transaction references a previous block including transaction information on other transactions. In an embodiment, at least a part of the blockchain ledger may be stored in nodes (for example, the first electronic device 110 and the second electronic device 120) within the blockchain network, respectively.

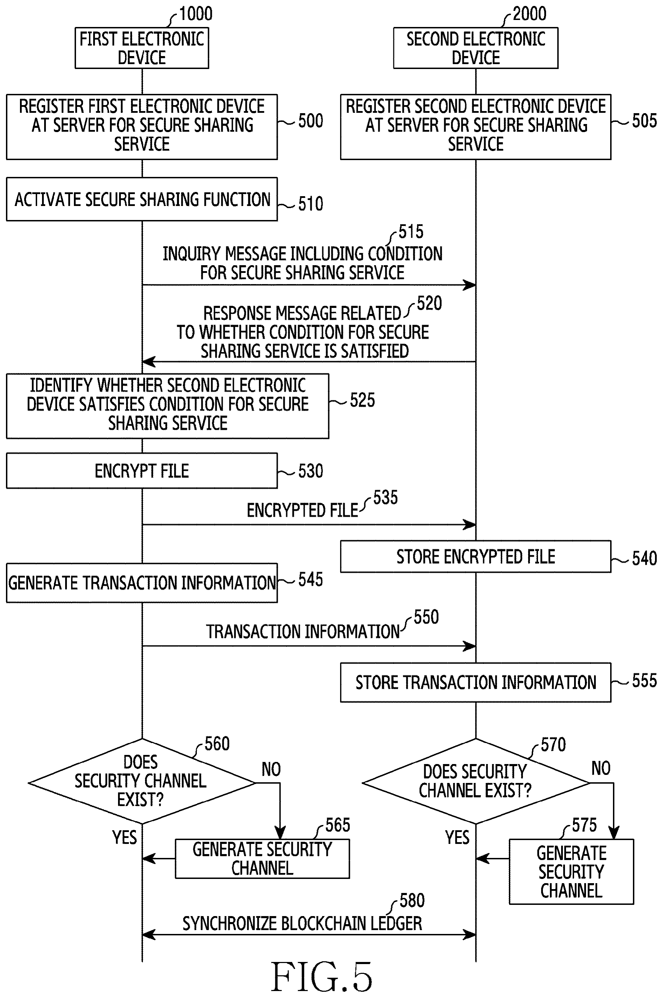

FIG. 5 is a flowchart illustrating a method by which the first electronic device shares a file with the second electronic device registered at the secure sharing service through the blockchain network according to an embodiment.

In operation 500, the first electronic device 110 may register the first electronic device 110 at the server 130 for the secure sharing service. The first electronic device 110 may request the server 130 which provides the secure sharing service to register the first electronic device 110. Accordingly, a private number for secure sharing may be issued by the server 130. For example, a push token for receiving a push from the server 130 may be registered at the server 130, such that the private number of the first electronic device 110 may be issued by the server 130. In addition, for example, the phone number and the private number of the first electronic device 110 may be registered at the server 130.

In operation 505, the second electronic device 120 may register the second electronic device 120 at the server 130 for the secure sharing service. The second electronic device 120 may request the server 130 which provides the secure sharing service to register the second electronic device 120. Accordingly, a private number for secure sharing may be issued by the server 130. For example, a push token for receiving a push from the server 130 may be registered at the server 130, such that the private number of the second electronic device 120 may be issued by the server 130. In addition, for example, the phone number and the private number of the second electronic device 120 may be registered at the server 130.

In operation 510, the first electronic device 110 may activate the secure sharing function. For example, the first electronic device 110 may execute an application for sharing files, and may receive a user input of selecting an object for activating the secure sharing function on the screen of the application. As the object for activating the secure sharing function is selected, the first electronic device 110 may activate the secure sharing function.

According to an embodiment, when the user input for activating the secure sharing function is received on the screen of the application, if the first electronic device 110 is not registered at the server 130 for the secure sharing service, the first electronic device 110 may display a graphical user interface (GUI) for registering the first electronic device 110 for the secure sharing service. In addition, the first electronic device 110 may perform operation 500 to register the first electronic device 110 at the server 130 based on a user input on the GUI displayed on the screen.

In operation 515, the first electronic device 110 may transmit at least one inquiry message including a condition for the secure sharing service to the second electronic device 120, and in operation 520, the second electronic device 120 may transmit at least one response message regarding whether the condition for the secure sharing service is satisfied to the first electronic device 110.

According to an embodiment, the first electronic device 110 may search at least one external electronic device located nearby by using short-range communication. For example, the first electronic device 110 may broadcast a search request packet by using Bluetooth communication (for example, Bluetooth low energy (BLE)). In this case, at least one external electronic device including the second electronic device 120 may broadcast a search response packet in response to the search request packet from the first electronic device 110. For example, the second electronic device 120 may broadcast the search response packet through a BLE advertisement packet. In addition, the first electronic device 110 may receive the search response packet from the second electronic device 120, and may display a list of searched electronic devices on the screen. In this case, the first electronic device 110 may include only external electronic devices that are registered at the server 130 providing the secure sharing service in the list. In addition, the first electronic device 110 may receive a user input of selecting the second electronic device 120 from the list of electronic devices.

For example, when the first electronic device 110 searches the second electronic device 120 through BLE communication, the first electronic device 110 may request information on features related to whether the second electronic device 120 is able to use the secure sharing service from the second electronic device 120. For example, the first electronic device 110 may provide messages in formats as shown in the following <Table 2> to the second electronic device 120, and the second electronic device 120 may provide response messages in formats as shown in the following <Table 2> to the first electronic device 110.

**<Table 2>**

| Message | Field | Description |
|---|---|---|
| CheckPrecondition | Result | Result value |
| | Support | Whether there is support or not |
| Support | Feature | Secure sharing feature |
| | SenderVersion | Sender version |
| | ReceiverVersion | Receiver version |
| | SenderMeta | Sender meta data |
| | ReceiverMeta | Receiver metadata |
| Feature | UNKNOWN PRIVACY_SHARING | Supported feature |
| Result | SUCCESS FAILURE | Success or Failure |

According to an embodiment, the first electronic device 110 may request D2D communication connection (for example, WiFi communication) to the second electronic device 120, and may provide the private number of the first electronic device 110 to the second electronic device 120 in the process of connecting D2D communication. In addition, the second electronic device 120 may accept the D2D communication connection, such that a session of D2D communication for file transmission may be formed. For example, a session of WiFi-Direct communication or WiFi-Aware communication for file transmission may be formed.

According to an embodiment, after D2D communication is established, the first electronic device 110 and the second electronic device 120 may exchange data for identifying whether a predetermined condition for the secure sharing service is satisfied through bidirectional messaging. For example, since the first electronic device 110 and the second electronic device 120 should be connected to a network for communication with the server 130 to register a channel address at the server 130 at the time of generating a security channel or to update the blockchain ledger, the first electronic device 110 and the second electronic device 120 may exchange information on a network state. In addition, for example, the first electronic device 110 and the second electronic device 120 may exchange information indicating whether system time is automatically set to designated standard time to synchronize the blockchain ledger.

In addition, for example, the first electronic device 110 and the second electronic device 120 may exchange private numbers, certificates issued from the server 130, and hash values of phone numbers with each other, and may update each other's information. Accordingly, contact information when a friend device is searched through D2D searching may be equally updated on secure recording. For example, the first electronic device 110 and the second electronic device 120 may exchange messages in formats as shown in the following <Table 3>.

**<Table 3>**

| Message | Field | Description |
|---|---|---|
| PrivacyCondition | SenderPrivateNumber | Private number of the sender |
| | ReceiverPrivateNumber | Private number of the receiver |
| | SenderFingerPrint | Certificate information of the sender |
| | ReceiverFingerPrint | Certificate information of the receiver |
| | SenderPhoneNumberHash | Phone number hash information of the sender |
| | ReceiverPhoneNumberHash | Phone number hash information of the receiver |

In operation 525, the first electronic device 110 may identify whether the second electronic device 120 satisfies the condition for the secure sharing service. According to an embodiment, the first electronic device 110 may exchange information with the second electronic device 120 as in operations 510 and 520, thereby identifying whether the second electronic device 120 satisfies the condition for the secure sharing service based on the exchanged information. For example, when the second electronic device 120 is an electronic device registered at the server 130, the second electronic device 120 is connected to a network for communication with the server 130, and the system time of the second electronic device 120 is automatically set to designated standard time, the first electronic device 110 may determine that the second electronic device 120 satisfies the condition for the secure sharing service.

In addition, the second electronic device 120 may exchange information with the first electronic device 110 as in operations 510 and 520, thereby identifying whether the first electronic device 110 satisfies the condition for the secure sharing service based on the exchanged information. For example, when the first electronic device 110 is an electronic device registered at the server 130, the first electronic device 110 is connected to a network for communication with the server 130, and the system time of the first electronic device 110 is automatically set to designated standard time, the second electronic device 120 may determine that the first electronic device 110 satisfies the condition for the secure sharing service.

According to an embodiment, operations 515, 520, and 525 may be performed before the file is transmitted.

In operation 530, the first electronic device 110 may encrypt the file. According to an embodiment, the first electronic device 110 may encrypt the file to transmit to the second electronic device 120 by using a predetermined encryption key. For example, the first electronic device 110 may encrypt the file by using a symmetric key that is pre-designated by the first electronic device 110 and the second electronic device 120. According to an embodiment, when the second electronic device 120 is selected from the list of electronic devices searched, the first electronic device 110 may encrypt the file to be shared by using the symmetric key that is known to the first electronic device 110 and the second electronic device 120. According to an embodiment, the encrypted file may be copied into an internal repository of the first electronic device 110 for a file sharing application.

In operation 535, the first electronic device 110 may transmit the encrypted file to the second electronic device 120. The first electronic device 110 may transmit the encrypted file to the second electronic device 120 through short-range communication. The first electronic device 110 may transmit the encrypted file to the second electronic device 120 through D2D communication established between the first electronic device 110 and the second electronic device 120. For example, the first electronic device 110 may transmit the encrypted file to the second electronic device 120 through WiFi communication (for example, WiFi-Aware or WiFi-Direct).

In operation 540, the second electronic device 120 may store the encrypted file. The second electronic device 120 may store the received encrypted file in an internal repository of the second electronic device 120 for a file sharing application.

According to an embodiment, the encrypted file may be exchanged between the first electronic device 110 and the second electronic device 120 through D2D communication, such that there is no file to be shared in an external server, and accordingly, security in file sharing between the first electronic device 110 and the second electronic device 120 may be reinforced.

In operation 545, the first electronic device 110 may generate transaction information. According to an embodiment, the first electronic device 110 may generate transaction information including detailed information on file sharing. For example, to generate transaction information containing detailed information on file sharing after the first electronic device 100 transmits the encrypted file to the second electronic device 120, mapping of file information and unique keys which are necessary for synchronizing the blockchain ledger may be updated in the first electronic device 110 and the second electronic device 120, respectively. In this case, the first electronic device 110 which provides the file to be shared may set the authority to read, delete, and modify the file, and may set an effective period to access the file, thereby generating transaction information.

For example, information for synchronizing the blockchain ledger may be shared and updated by the first electronic device 110 and the second electronic device 120. For example, the first electronic device 110 may generate a message containing the private number, sharing expiration date, and file information of the first electronic device 110, and may transmit the message to the second electronic device 120. For example, the second electronic device 120 may update information in the second electronic device 120 based on the received message, and may transmit a response message to the first electronic device 110. For example, the first electronic device 110 and the second electronic device 120 may exchange messages in formats as shown in the <Table 1>. In addition, the transaction information may include, for example, at least one of the private number of the first electronic device 110, an effective period (or an expiration date) of the file to share, an identification value of the encrypted file, a secure sharing ID, a mime type of the file, an identification value of the file for decrypting the encrypted file, a file key, a file name, a thumbnail file key or a thumbnail file name, but is not limited thereto. In addition, for example, the file key or the thumbnail file key may be generated and managed separately from the transaction information.

In operation 550, the first electronic device 110 may provide the transaction information to the second electronic device 120, and in operation 555, the second electronic device 120 may store the transaction information. According to an embodiment, the first electronic device 110 and the second electronic device 120 may identify that the transaction information in the first electronic device 110 and the transaction information in the second electronic device 120 may be synchronized.

In operation 560, the first electronic device 110 may identify whether there exists a security channel, and in operation 570, the second electronic device 120 may identify whether there exists a security channel. The first electronic device 110 and the second electronic device 120 may identify whether a security channel for the secure sharing service is generated through the blockchain network.

When a security channel does not exist between the first electronic device 110 and the second electronic device 120, the first electronic device 110 and the second electronic device 120 may generate a security channel in operations 565 and 575. For example, the first electronic device 110 and the second electronic device 120 may generate the security channel as in operations 430 and 435.

When there exits a security channel between the first electronic device 110 and the second electronic device 120, the first electronic device 110 and the second electronic device 120 may synchronize the blockchain ledger in operation 580.

The first electronic device 110 may request synchronization in the blockchain ledger based on information of the second electronic device 120 which receives the transmitted file information and file, and may transmit a message to the second electronic device 120. The second electronic device 120 may receive the message from the first electronic device 110, and may wait until a push indicating completion of the synchronization of the blockchain ledger is received, and may transmit a response message to the first electronic device 110 when the synchronization of the blockchain ledger is completed. For example, the first electronic device 110 and the second electronic device 120 may exchange messages in formats as shown in the following <Table 4>.

**[Table 4]**

| Message | Field | Description |
|---|---|---|
| PrivacySyncLedger | CompletedSender | Whether synchronization of the sender ledger is completed |
| | CompletedReceiver | Whether synchronization of the receiver ledger is completed |

According to an embodiment, the first electronic device 110 and the second electronic device 120 may exchange a message through D2D communication. In this case, a message for synchronizing the blockchain ledger may be directly exchanged between the first electronic device 110 and the second electronic device 120 through D2D communication that is trusted. Accordingly, the procedure for synchronizing the blockchain ledger may be protected from a man in the middle attack.

According to an embodiment, the first electronic device 110 and the second electronic device 120 exchange a message through the server 130, thereby synchronizing the blockchain ledger. In this case, the message for synchronizing the blockchain ledger may be exchanged between the first electronic device 110 and the second electronic device 120 through the security channel.

According to an embodiment, the transaction information provided to the second electronic device 120 may be validated by the second electronic device 120. When the transaction information is validated by the second electronic device 120, the first electronic device 110 and the second electronic device 120 may synchronize the block including the transaction information. The first electronic device 110 and the second electronic device 120 may include the block including the transaction information in the blockchain ledger within the network.

According to an embodiment, when the transaction information is normally generated, the transaction information may be data for recording detailed contents of the transaction on the blockchain ledger. For example, the transaction information may include data indicating a history of having transmitted files between accounts within the blockchain network. The transaction may refer to an action that causes changes in the contents of the blockchain ledger. For example, transaction information for which autography is normally completed may be recorded on the blockchain ledger, and transaction information for which autography is not normally completed may not be recorded on the ledger. For example, it may be monitored whether the transaction information is recorded on the block by the transaction through the transaction ID. For example, the transaction information may be recorded on the blockchain ledger by using a smart contract.

In an embodiment, the blockchain ledger may be data in a chain format where a block including transaction information on at least one transaction references a previous block including transaction information on other transactions. In an embodiment, at least a part of the blockchain ledger may be stored in nodes (for example, the first electronic device 110 and the second electronic device 120) within the blockchain network, respectively.

According to an embodiment, after the blockchain ledger is synchronized, the first electronic device 110 may provide a message for closing the session (close session message) to the second electronic device 120, and the second electronic device 120 may also provide a message for closing the session (close session message) to the first electronic device 110, and may request closing of the file transmission. The first electronic device 110 may receive a response from the second electronic device 120, thereby closing messaging (for example, custom control messaging). For example, the message exchanged between the first electronic device 110 and the second electronic device 120 to close the session may be a message in a format as shown in the following <Table 5>.

**[Table 5]**

| Message | Field | Description |
|---|---|---|
| Close session | Result | Result value |
| | Message | Close message |

According to an embodiment, the second electronic device 120 may decrypt the encrypted file which is received from the first electronic device 110, based on the transaction information recorded on the blockchain ledger and information on the file key. For example, the second electronic device 120 may identify the encrypted file stored in the second electronic device 120 and a decryption key for the encrypted file, based on the transaction information and the information on the file key, and may decrypt the encrypted file using the decryption key and may execute the decrypted fil.

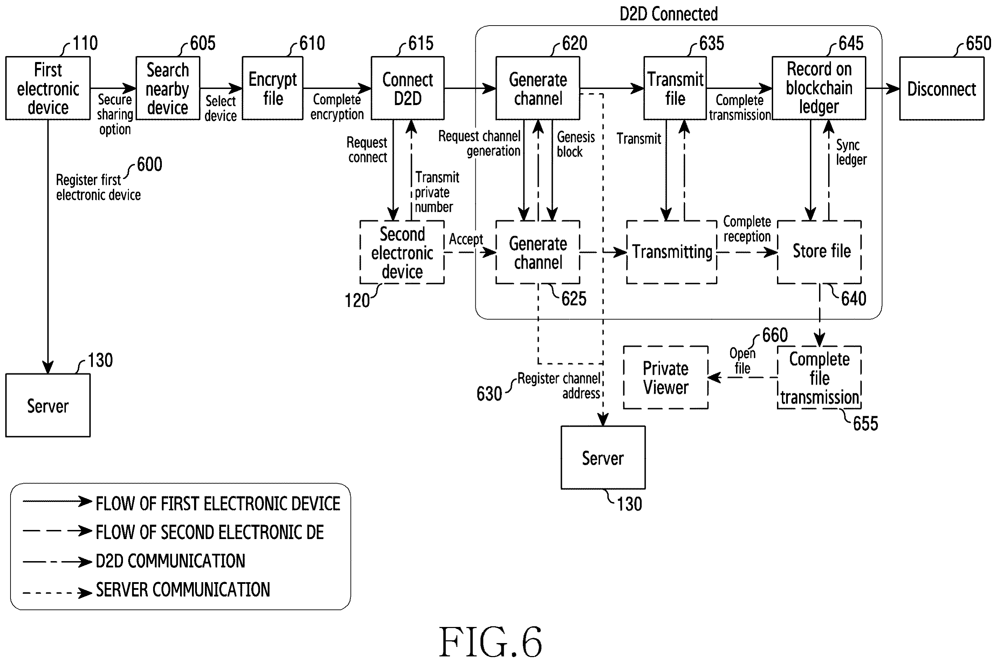

FIG. 6 is a view illustrating an example of the first electronic device generating a security channel through D2D communication, transmitting a file to the second electronic device, and synchronizing the blockchain ledger according to an embodiment of the disclosure.

Referring to FIG. 6, the first electronic device 110 may register the first electronic device 110 at the server 130 (600). The first electronic device 110 may register information related to the first electronic device 110 at the server 130 through a file sharing application which provides a secure sharing service using a blockchain. For example, the first electronic device 110 may register a hash ID, a private number, and a push token at the server 130.

According to an embodiment, the first electronic device 110 may search nearby devices registered at the server 130 (605). The first electronic device 110 may activate the secure sharing function of the file sharing application based on a user input, and may search nearby devices registered at the server 130 which provides or manages the secure sharing service. In addition, the first electronic device 110 may select the second electronic device 120 as an electronic device to receive a file among the searched nearby devices.

According to an embodiment, the first electronic device 110 may encrypt a file to share (610), and may establish D2D communication connection with the second electronic device 120 (615). The first electronic device 110 may request D2D communication connection from the second electronic device 120, and the second electronic device 120 may provide the private number of the second electronic device 120 registered at the server 130 to the first electronic device 110.

According to an embodiment, when D2D communication connection is established between the first electronic device 110 and the second electronic device 120, the first electronic device 110 and the second electronic device 120 may generate a security channel for the block chain through D2D communication (620, 625). The first electronic device 110 may request the second electronic device 120 to generate the security channel, and may provide a genesis block to the second electronic device 120, and the second electronic device 120 which receives the genesis block may provide a response message to the first electronic device 110. When the security channel is generated between the first electronic device 110 and the second electronic device 120, the channel address of the security channel may be registered at the server 130 (630). According to an embodiment, the channel address of the security channel may not be registered at the server 130.

According to an embodiment, the first electronic device 110 may transmit the encrypted file to the second electronic device 120 through D2D communication (635), and the second electronic device 120 may receive the encrypted file and store the received encrypted file (640). For example, the second electronic device 120 may store the encrypted file in a memory that is allocated to the file sharing application.

According to an embodiment, the first electronic device 110 may record transaction information related to file transmission on the blockchain ledger (645). In this case, the transaction information may be validated by the second electronic device 120, and the blockchain ledger of the first electronic device 110 and the blockchain ledger of the second electronic device 120 may be synchronized with each other.

According to an embodiment, the D2D communication connection between the first electronic device 110 and the second electronic device 120 may be disconnected (650), and the file transmission from the first electronic device 110 to the second electronic device 120 may be completed (655). Thereafter, the second electronic device 120 may open the encrypted file by using the transaction information and a file key which are included in the blockchain ledger (660).

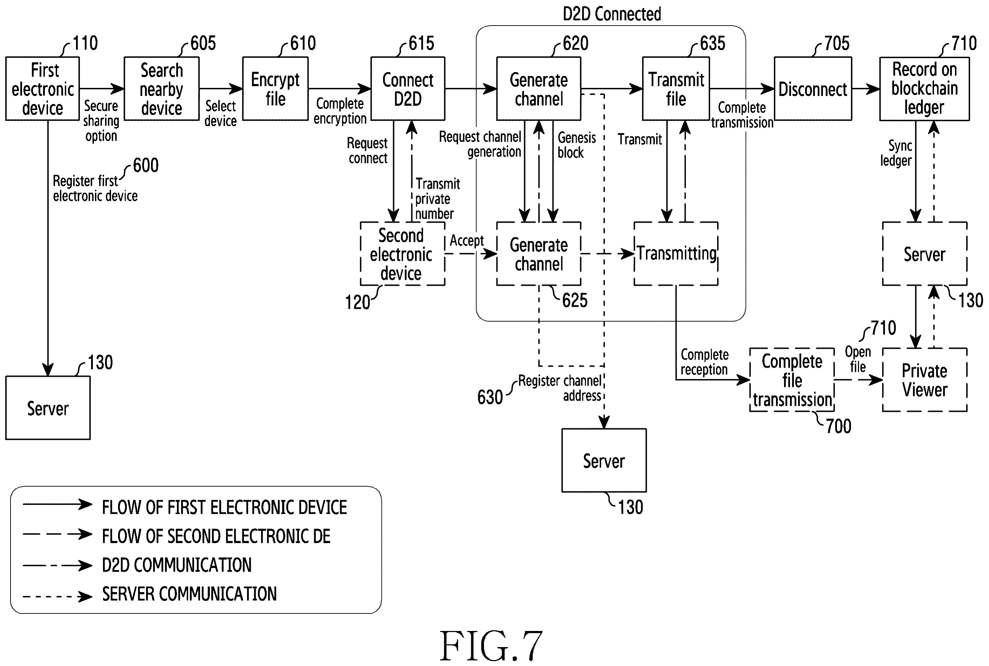

FIG. 7 is a view illustrating an example of the first electronic device generating a security channel through D2D communication, transmitting a file to the second electronic device, and synchronizing the blockchain ledger after disconnecting D2D communication connection according to an embodiment of the disclosure.

Identification numbers 600 to 635 in FIG. 7 are the same as identification numbers 600 to 635 in FIG. 6, and thus, descriptions thereof are omitted.

Referring to FIG. 7, the second electronic device 120 may store the file received from the first electronic device 110 (700). For example, the second electronic device 120 may store the encrypted file in a memory allocated to the file sharing application.

According to an embodiment, the first electronic device 110 may disconnect D2D communication connection after transmitting the encrypted file to the second electronic device 120. According to an embodiment, after disconnecting the D2D communication connection, the first electronic device 110 may record the transaction information related to the file transmission on the blockchain ledger (710). In this case, the first electronic device 110 may exchange information necessary for recording the transaction information on the blockchain ledger with the second electronic device 120 through the server 130. The first electronic device 110 may exchange data with the second electronic device 120 through the security channel registered at the server 130. The transaction information provided from the first electronic device 110 may be validated by the second electronic device 120, and the blockchain ledger of the first electronic device 110 and the blockchain ledger of the second electronic device 120 may be synchronized with each other. Thereafter, the second electronic device 120 may open the encrypted file by using the transaction information and a file key which are included in the blockchain ledger (710).

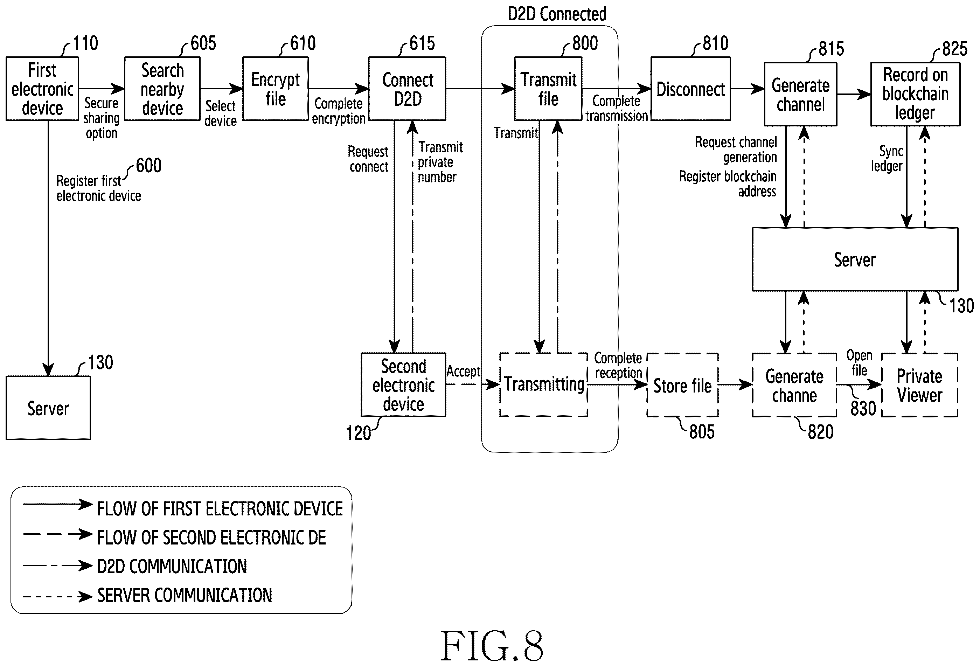

FIG. 8 is a view illustrating an example of the first electronic device transmitting a file to the second electronic device through D2D communication, generating a security channel after disconnecting the D2D communication connection, and synchronizing the blockchain ledger according to an embodiment of the disclosure.

Identification numbers 600 to 615 inf FIG. 8 are the same as identification numbers 600 to 615 in FIG. 6, and thus, descriptions thereof are omitted.

According to an embodiment, the first electronic device 100 may transmit the encrypted file to the second electronic device 120 through D2D communication (800), and the second electronic device 120 may receive the encrypted file and store the received encrypted file (805). For example, the second electronic device 120 may store the encrypted file in a memory allocated to the file sharing application.

According to an embodiment, the file transmission from the first electronic device 100 to the second electronic device 120 may be completed, and the D2D communication connection between the first electronic device 110 and the second electronic device 120 may be disconnected (810).

According to an embodiment, the first electronic device 110 and the second electronic device 120 may generate a security channel for the blockchain through the server 130 (815, 820). The first electronic device 110 may request the second electronic device 120 to generate the security channel through the server 130, and may provide a genesis block, and the second electronic device 120 which receives the genesis block may provide a response message to the first electronic device 110 through the server 130. When the security channel is generated between the first electronic device 110 and the second electronic device 120, the channel address of the security channel may be registered at the server 130.

According to an embodiment, after the security channel is generated, the first electronic device 110 may record the transaction information related to the file transmission on the blockchain ledger (825). In this case, the first electronic device 110 may exchange information necessary for recording the transaction information on the blockchain ledger with the second electronic device 120 through the server 130. The first electronic device 110 may exchange data with the second electronic device 120 through the security channel registered at the server 130. The transaction information provided from the first electronic device 110 may be validated by the second electronic device 120, and the blockchain ledger of the first electronic device 110 and the blockchain ledger of the second electronic device 120 may be synchronized with each other. Thereafter, the second electronic device 120 may open the encrypted file by using the transaction information and a file key which are included in the blockchain ledger (830).

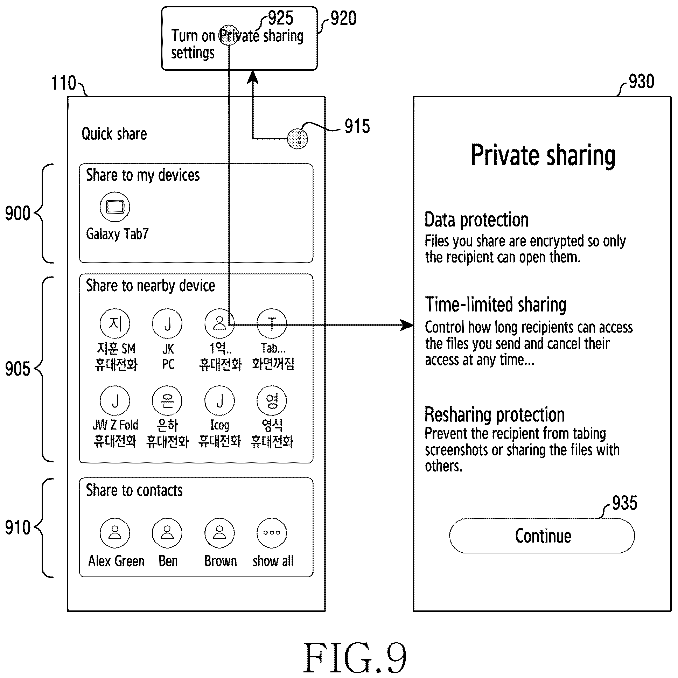

FIG. 9 is a view illustrating an example of an execution screen in a normal sharing mode of a file sharing application which is displayed on the screen of the first electronic device according to an embodiment of the disclosure.

Referring to FIG. 9, an execution screen of a file sharing application in a normal sharing mode may be displayed on the screen of the first electronic device 110. The normal sharing model may be a mode in which files are shared without using a blockchain network. The execution screen of the file sharing application in the normal sharing mode may include a first area 900 for sharing files with another electronic device of the user of the first electronic device 100, a second area 905 for sharing files with an external electronic device connected through short-range communication, and a third area 910 for sharing files with an external electronic device based on contact information of the first electronic device 110.

According to an embodiment, when a menu button 915 on the execution screen of the file sharing application in the normal sharing mode is selected by the user, the first electronic device 110 may display a GUI 920 to activate the secure sharing function of files. For example, the GUI 920 may include an item 925 for activating the secure sharing function of the file. In addition, in response to the item 925 being selected by the user, the file sharing application may operate in the secure sharing mode.

According to an embodiment, when the item 925 is selected by the user, the first electronic device 110 may display a GUI 930 to guide the secure sharing service. The GUI 930 may include a button 935 to register the first electronic device 110 for the secure sharing service. When the button 935 is selected by the user, the first electronic device 110 may register the first electronic device 110 at the server 130 providing the secure sharing service through predetermined procedures.

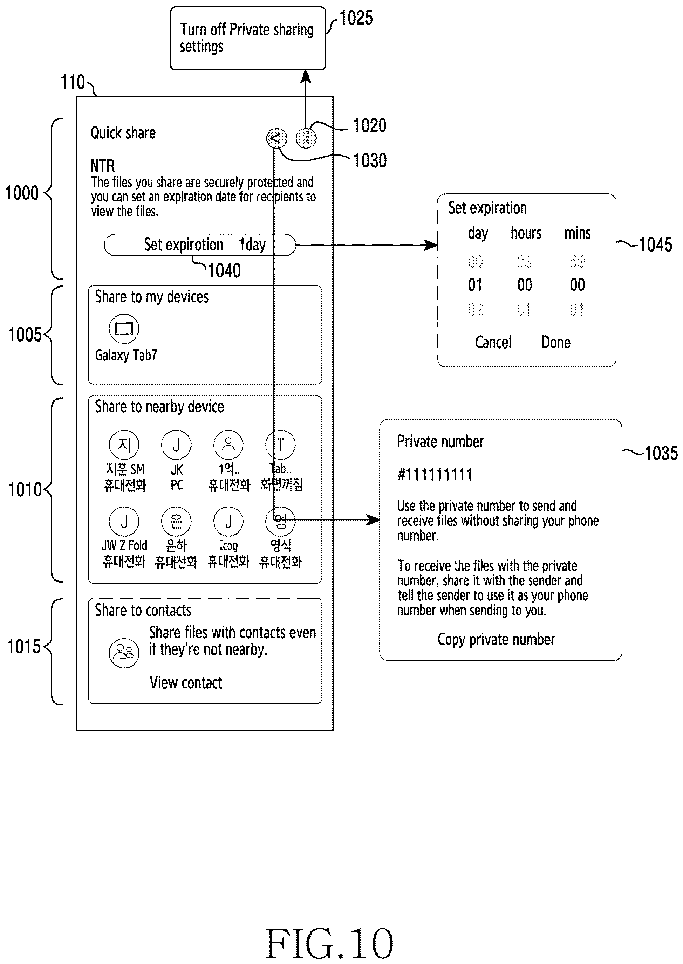

FIG. 10 is a view illustrating an example of an execution screen in a secure sharing mode of a file sharing application which is displayed on the screen of the first electronic device according to an embodiment of the disclosure.

Referring to FIG. 10, an execution screen of a file sharing application in a secure sharing mode may be displayed on the screen of the first electronic device 110. The secure sharing mode may be a mode in which files are shared by using a blockchain network. The execution screen of the file sharing application in the secure sharing mode may include a fourth area 1000 for setting for secure sharing of files, a fifth area 1005 for sharing files with another electronic device of the user of the first electronic device 110, a sixth area 1010 for sharing files with an external electronic device connected through short-range communication, and a seventh area 1015 for sharing files with an external electronic device based on contact information of the first electronic device 110.

In this case, unlike the second area 905 and the third area 910 in the normal sharing mode, the sixth area 1010 and the seventh area 1015 may display only the list of external electronic devices registered at the server 130 for the secure sharing service. In addition, the list of external electronic devices searched through short-range communication may be displayed within the sixth area 1010. The list of external electronic devices may include icons and/or texts indicating profiles of users of the external electronic devices. The first electronic device 110 may select the second electronic device 120 (or the user of the second electronic device 120) from the list of external electronic devices included in the sixth area 1010, and may perform procedures for secure sharing with the second electronic device 120.

According to an embodiment, within the fourth area 1000 for setting secure sharing of files, a button 1020 to revoke secure sharing of the file, a button 1030 to provide the private number of the first electronic device 110 related to secure sharing, and an object 1040 for setting an effective period of secure sharing of the file may be displayed.

For example, when the button 1020 to revoke the secure sharing of the file is selected by the user, a GUI 1025 to revoke secure sharing may be displayed.

For example, when the button 1030 for providing the private number of the first electronic device 110 is selected, a GUI 1035 may be displayed to display the private number of the first electronic device 110 registered at the server 130 and to allow the private number to be copied.

For example, when the object 1040 for setting the effective period of the secure sharing of the file is selected, a GUI 1045 to set the effective period of the secure sharing the file specifically may be displayed.

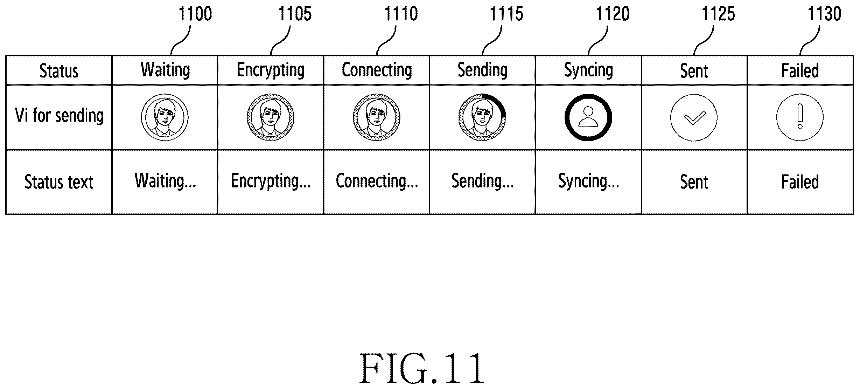

FIG. 11 is a view illustrating changes in the icon and the text corresponding the second electronic device displayed on the screen of the first electronic device according to a state of the sharing procedure as the procedures for secure sharing of the file between the first electronic device and the second electronic device are performed according to an embodiment of the disclosure.

Referring to FIG. 11, the states of the procedures for secure sharing of the file between the first electronic device 110 and the second electronic device 120 may include, for example, a waiting state 1100, an encryption state 1105, a connection state 1110, a transmission state 1115, a synchronization state 1120, a transmission completion state 1125, and a failure state 1130.

In addition, as the states of the procedures for secure sharing of the file between the first electronic device 110 and the second electronic device 10 are the waiting state 1100, the encryption state 1105, the connection state 1110, the transmission state 1115, the synchronization state 1120, the transmission completion state 1125, or the failure state 1130, the icon and the text corresponding to the second electronic device 120 which are displayed within the sixth area 1010 of FIG. 10 may be changed.

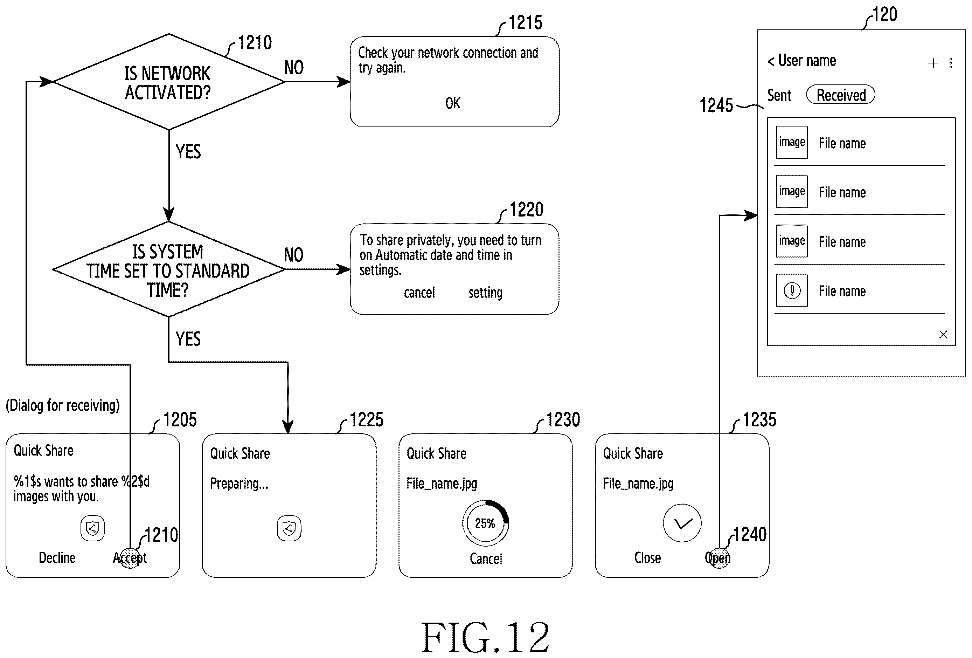

FIG. 12 is a view illustrating an example of an execution screen of a file sharing application displayed on the screen of the second electronic device as the procedures for secure sharing of files are performed between the first electronic device and the second electronic device according to an embodiment of the disclosure.

Referring to FIG. 12, the second electronic device 120 which receives a request for sharing files from the first electronic device 110 may display a GUI 1205 including a message that the first electronic device 110 wants to share files on the screen of the second electronic device 120. When a user input of selecting a button 1210 to accept the file sharing within the GUI 1205 is received, the second electronic device 120 may determine whether a network for secure sharing of files is activated (1210).

If the network for secure sharing of files is not activated, the second electronic device 120 may display a GUI 1215 guiding activation of the network for secure sharing of files.

If the network for secure sharing of files is activated, the second electronic device 120 may determine whether system time of the second electronic device 120 is set to standard time.

If the system time of the second electronic device 120 is not set to the standard time, the second electronic device 120 may display a GUI 1220 to guide setting of the system time to the standard time.

If the system time of the second electronic device 120 is set to the standard time, the second electronic device 120 may display a GUI 1225 to prepare secure sharing of files, and may display a GUI 1230 indicating a transmission state of a file transmitted from the first electronic device 110.

For example, when the transmission of a file from the first electronic device 110 to the second electronic device 120 is completed, the second electronic device 120 may display a GUI 1235 to guide the completion of transmission of the file. The GUI 1235 may include a button 1240 for providing a list of files being shared with the first electronic device 110.

For example, when a user input of selecting the button 1240 is received, the second electronic device 120 may display a GUI 1245 including a list of files shared with the first electronic device 110 through the secure sharing service. For example, the GUI 1245 may display file names of the shared files and expiration dates at which the sharing of the files expires.

An embodiment of the disclosure may provide an electronic device and a method for sharing files, which generate a blockchain network for sharing files through communication that is trusted between electronic devices, and uses the blockchain network.

An embodiment of the disclosure may provide an electronic device and a method for sharing files, which manage files shared between electronic devices connected through short-range communication through a blockchain network.

An embodiment of the disclosure may provide an electronic device and a method for sharing files, which share files between electronic devices connected through D2D communication that is trusted, and simply generate a channel for a blockchain network.

According to an embodiment of the disclosure, there is provided a method for a first electronic device to share a file with a second electronic device, the method including: selecting the second electronic device registered at a server for a secure sharing service (400); identifying whether a network state and a system time setting of the second electronic device satisfy a predetermined criterion for the secure sharing service (415); encrypting the file (420); transmitting the encrypted file to the second electronic device (425); generating a security channel for generating a blockchain for the secure sharing service with the second electronic device in response to the predetermined criterion being satisfied (430); generating transaction information related to the encrypted file transmitted to the second electronic device (440); and recording the generated transaction information on a blockchain ledger of the blockchain through the security channel (450).

According to an embodiment of the disclosure, the blockchain ledger may contain information for the second electronic device to decrypt the encrypted file.

According to an embodiment of the disclosure, a private number of the first electronic device registered at the server and a private number of the second electronic device registered at the server may be shared between the first electronic device and the second electronic device, and selecting the second electronic device may include selecting the second electronic device based on the private number of the second electronic device.

According to an embodiment of the disclosure, identifying whether the predetermined criterion is satisfied may include identifying whether a network function of the second electronic device for communication with the server is activated, and whether the system time of the second electronic device is synchronized with a reference time.

According to an embodiment of the disclosure, the method may further include connecting communication with the second electronic device through a device to device (D2D) communication network, and transmitting the encrypted file may include transmitting the encrypted file to the second electronic device through the D2D communication network.

According to an embodiment of the disclosure, the D2D communication network may be different from a network for communication with the server.

According to an embodiment of the disclosure, generating the security channel may include generating the security channel for generating the blockchain while connecting the communication with the second electronic device through the D2D communication.

According to an embodiment of the disclosure, generating the security channel may include generating the security channel for generating the blockchain after disconnecting the connection of the D2D communication network between the first electronic device and the second electronic device.

According to an embodiment of the disclosure, recording the generated transaction information on the blockchain ledger may include recording the generated transaction information on the blockchain ledger while connecting the communication with the second electronic device through the D2D communication.

According to an embodiment of the disclosure, recording the generated transaction information on the blockchain ledger may include recording the generated transaction information on the blockchain ledger after disconnecting the connection of the D2D communication between the first electronic device and the second electronic device.

According to an embodiment of the disclosure, the transaction information may include at least one _of the transmission time, an expiration time of sharing of the file, a link address of the encrypted content, or an identification value of a

### decryption key for decrypting the encrypted content.

According to an embodiment, a file is transmitted between the first electronic device 110 and the second electronic device 120 through D2D communication trusted therebetween, so that only the first electronic device 110 and the second electronic device 120 sharing the file is allowed to view the file. In addition, according to an embodiment, after the file is transmitted, the first electronic device which is an original owner of the file may be enabled to control the authority of the file. In addition, the shared file may be encrypted and recorded on the blockchain ledger by using blockchain technology, and accordingly, hackers are prevented from manipulating the blockchain ledger arbitrarily and accessing the blockchain ledger. In addition, the owner of the file may safely share the file and may enable all users participating in the security channel to have the ledger of the same contents. In addition, since the authority for the shared file is generated by the owner of the file, a user receiving the shared file is prevented from changing the authority of the file arbitrarily or sharing the file to other people again.

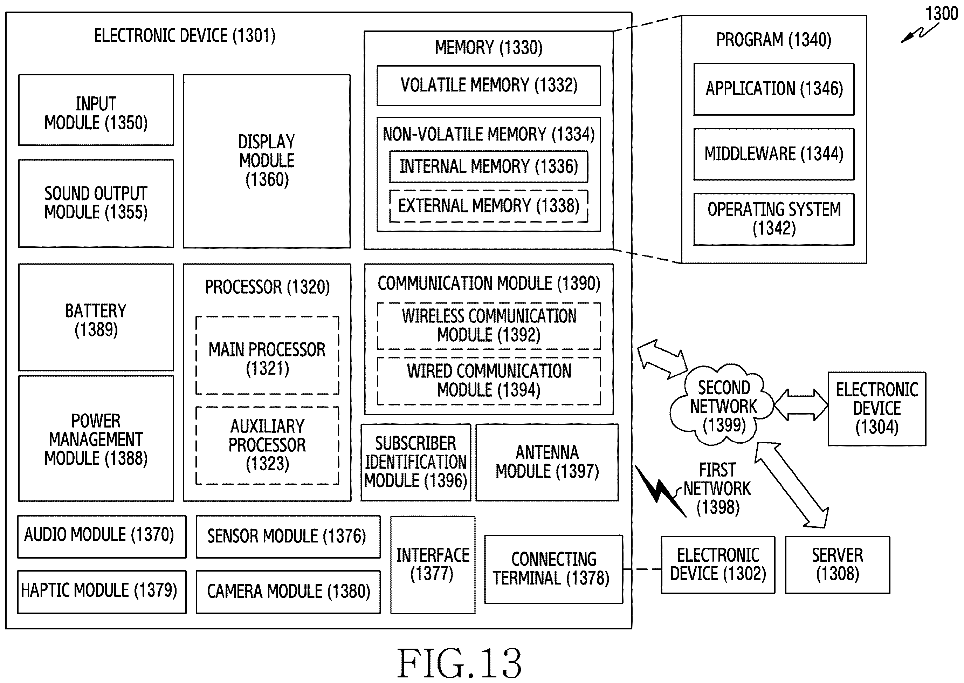

Fig. 13 is a block diagram illustrating an electronic device 1301 in a network environment 1300 according to various embodiments. Referring to Fig. 13, the electronic device 1301 in the network environment 1300 may communicate with an electronic device 1302 via a first network 1398 (e.g., a short-range wireless communication network), or at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, memory 1330, an input module 1350, a sound output module 1355, a display module 1360, an audio module 1370, a sensor module 1376, an interface 1377, a connecting terminal 1378, a haptic module 1379, a camera module 1380, a power management module 1388, a battery 1389, a communication module 1390, a subscriber identification module(SIM) 1396, or an antenna module 1397. In some embodiments, at least one of the components (e.g., the connecting terminal 1378) may be omitted from the electronic device 1301, or one or more other components may be added in the electronic device 1301. In some embodiments, some of the components (e.g., the sensor module 1376, the camera module 1380, or the antenna module 1397) may be implemented as a single component (e.g., the display module 1360).

The processor 1320 may execute, for example, software (e.g., a program 1340) to control at least one other component (e.g., a hardware or software component) of the electronic device 1301 coupled with the processor 1320, and may perform various data processing or computation. According to one embodiment, as at least part of the data processing or computation, the processor 1320 may store a command or data received from another component (e.g., the sensor module 1376 or the communication module 1390) in volatile memory 1332, process the command or the data stored in the volatile memory 1332, and store resulting data in non-volatile memory 1334. According to an embodiment, the processor 1320 may include a main processor 1321 (e.g., a central processing unit (CPU) or an application processor (AP)), or an auxiliary processor 1323 (e.g., a graphics processing unit (GPU), a neural processing unit (NPU), an image signal processor (ISP), a sensor hub processor, or a communication processor (CP)) that is operable independently from, or in conjunction with, the main processor 1321. For example, when the electronic device 1301 includes the main processor 1321 and the auxiliary processor 1323, the auxiliary processor 1323 may be adapted to consume less power than the main processor 1321, or to be specific to a specified function. The auxiliary processor 1323 may be implemented as separate from, or as part of the main processor 1321.

The auxiliary processor 1323 may control at least some of functions or states related to at least one component (e.g., the display module 1360, the sensor module 1376, or the communication module 1390) among the components of the electronic device 1301, instead of the main processor 1321 while the main processor 1321 is in an inactive (e.g., sleep) state, or together with the main processor 1321 while the main processor 1321 is in an active state (e.g., executing an application). According to an embodiment, the auxiliary processor 1323 (e.g., an image signal processor or a communication processor) may be implemented as part of another component (e.g., the camera module 1380 or the communication module 1390) functionally related to the auxiliary processor 1323. According to an embodiment, the auxiliary processor 1323 (e.g., the neural processing unit) may include a hardware structure specified for artificial intelligence model processing. An artificial intelligence model may be generated by machine learning. Such learning may be performed, e.g., by the electronic device 1301 where the artificial intelligence is performed or via a separate server (e.g., the server 1308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1330 may store various data used by at least one component (e.g., the processor 1320 or the sensor module 1376) of the electronic device 1301. The various data may include, for example, software (e.g., the program 1340) and input data or output data for a command related thererto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input module 1350 may receive a command or data to be used by another component (e.g., the processor 1320) of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output sound signals to the outside of the electronic device 1301. The sound output module 1355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1360 may visually provide information to the outside (e.g., a user) of the electronic device 1301. The display module 1360 may include, for example, a display, a hologram device, or a projector and control circuitry to control a corresponding one of the display, hologram device, and projector. According to an embodiment, the display module 1360 may include a touch sensor adapted to detect a touch, or a pressure sensor adapted to measure the intensity of force incurred by the touch.

The audio module 1370 may convert a sound into an electrical signal and vice versa. According to an embodiment, the audio module 1370 may obtain the sound via the input module 1350, or output the sound via the sound output module 1355 or a headphone of an external electronic device (e.g., an electronic device 1302) directly (e.g., wiredly) or wirelessly coupled with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

A connecting terminal 1378 may include a connector via which the electronic device 1301 may be physically connected with the external electronic device (e.g., the electronic device 1302). According to an embodiment, the connecting terminal 1378 may include, for example, a HDMI connector, a USB connector, a SD card connector, or an audio connector (e.g., a headphone connector).

The haptic module 1379 may convert an electrical signal into a mechanical stimulus (e.g., a vibration or a movement) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture a still image or moving images. According to an embodiment, the camera module 1380 may include one or more lenses, image sensors, image signal processors, or flashes.

The power management module 1388 may manage power supplied to the electronic device 1301. According to one embodiment, the power management module 1388 may be implemented as at least part of, for example, a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more communication processors that are operable independently from the processor 1320 (e.g., the application processor (AP)) and supports a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as BluetoothTM, wireless-fidelity (Wi-Fi) direct, or infrared data association (IrDA)) or the second network 1399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the subscriber identification module 1396.

The wireless communication module 1392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., the mmWave band) to achieve, e.g., a high data transmission rate. The wireless communication module 1392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1397 may transmit or receive a signal or power to or from the outside (e.g., the external electronic device) of the electronic device 1301. According to an embodiment, the antenna module 1397 may include an antenna including a radiating element composed of a conductive material or a conductive pattern formed in or on a substrate (e.g., a printed circuit board (PCB)). According to an embodiment, the antenna module 1397 may include a plurality of antennas (e.g., array antennas). In such a case, at least one antenna appropriate for a communication scheme used in the communication network, such as the first network 1398 or the second network 1399, may be selected, for example, by the communication module 1390 (e.g., the wireless communication module 1392) from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

According to various embodiments, the antenna module 1397 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the electronic devices 1302 or 1304 may be a device of a same type as, or a different type, from the electronic device 1301. According to an embodiment, all or some of operations to be executed at the electronic device 1301 may be executed at one or more of the external electronic devices 1302, 1304, or 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, a cloud computing, distributed computing, mobile edge computing (MEC), or client-server computing technology may be used, for example. The electronic device 1301 may provide ultra low-latency services using, e.g., distributed computing or mobile edge computing. In another embodiment, the external electronic device 1304 may include an internet-of-things (IoT) device. The server 1308 may be an intelligent server using machine learning and/or a neural network. According to an embodiment, the external electronic device 1304 or the server 1308 may be included in the second network 1399. The electronic device 1301 may be applied to intelligent services (e.g., smart home, smart city, smart car, or healthcare) based on 5G communication technology or IoT-related technology.

According to an embodiment, the electronic device 1301 of FIG. 13 may correspond to the first electronic device 110 or the second electronic device 120. When the electronic device 1301 of FIG. 13 corresponds to the first electronic device 110, the electronic device 1301 may perform operations of the first electronic device 110 in FIGS. 1 to 12. When the electronic device 1301 of FIG. 13 corresponds to the second electronic device 120, the electronic device 1301 may perform operations of the second electronic device 120 in FIGS. 1 to 12.

According to an embodiment, there is provided a first electronic device (110, 1301) including: a first communication interface (112-1, 1390); a second communication interface (112-2, 1390); a memory (111, 1330) configured to store instructions; and a processor (113, 1320) operatively connected with the first communication interface, the second communication interface, and the memory, wherein, when being executed by the processor, the instructions cause the first electronic device to: select a second electronic device registered at a server 130 for a secure sharing service; identify whether a network state and a system time setting of the second electronic device 120 satisfy a predetermined criterion for the secure sharing service; encrypt a file; transmit the encrypted file to the second electronic device; generate a security channel for generating a blockchain for the secure sharing service with the second electronic device in response to the predetermined criterion being satisfied; generate transaction information related to the encrypted file transmitted to the second electronic device; and record the generated transaction information on a blockchain ledger of the blockchain through the security channel.

According to an embodiment, the blockchain ledger may contain information for the second electronic device to decrypt the encrypted file.

According to an embodiment, a private number of the first electronic device registered at the server and a private number of the second electronic device registered at the server may be shared between the first electronic device and the second electronic device, and, when being executed by the processor, the instructions may cause the first electronic device to select the second electronic device based on the private number of the second electronic device.

According to an embodiment, when being executed by the processor, the instructions may cause the first electronic device to identify whether a network function of the second electronic device for communication with the server is activated, and whether the system time of the second electronic device is synchronized with a reference time.

According to an embodiment, communication with the second electronic device may be connected through a device to device (D2D) communication network, and the encrypted file may be transmitted to the second electronic device through the D2D communication network.

According to an embodiment, the D2D communication network may be different from a network for communication with the server.

According to an embodiment, when being executed by the processor, the instructions may cause the first electronic device to generate the security channel for generating the blockchain while connecting the communication with the second electronic device through the D2D communication.

According to an embodiment, when being executed by the processor, the instructions may cause the first electronic device to generate the security channel for generating the blockchain after disconnecting the connection of the D2D communication network between the first electronic device and the second electronic device.

According to an embodiment, when being executed by the processor, the instructions may cause the first electronic device to record the generated transaction information on the blockchain ledger while connecting the communication with the second electronic device through the D2D communication.

According to an embodiment, when being executed by the processor, the instructions may cause the first electronic device to record the generated transaction information on the blockchain ledger after disconnecting the connection of the D2D communication between the first electronic device and the second electronic device.

According to an embodiment, the transaction information may include at least one of the transmission time, an expiration time of sharing of the file, a link address of the encrypted content, or an identification value of a decryption key for decrypting the encrypted content.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the machine (e.g., the electronic device 1301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method for a first electronic device to share a file with a second electronic device, the method comprising:
selecting the second electronic device registered at a server for a secure sharing service (400);
identifying whether a network state and a system time setting of the second electronic device satisfy a predetermined criterion for the secure sharing service (415);
encrypting the file (420);
transmitting the encrypted file to the second electronic device (425);
generating a security channel for generating a blockchain for the secure sharing service with the second electronic device in response to the predetermined criterion being satisfied (430);
generating transaction information related to the encrypted file transmitted to the second electronic device (440); and
recording the generated transaction information on a blockchain ledger of the blockchain through the security channel (450),
wherein the blockchain ledger contains information for the second electronic device to decrypt the encrypted file.

2. The method of claim 1, wherein a private number of the first electronic device registered at the server and a private number of the second electronic device registered at the server are shared between the first electronic device and the second electronic device, and
wherein selecting the second electronic device comprises selecting the second electronic device based on the private number of the second electronic device.

3. The method of any one of claims 1 and 2, wherein identifying whether the predetermined criterion is satisfied comprises identifying whether a network function of the second electronic device for communication with the server is activated, and whether the system time of the second electronic device is synchronized with a reference time.

4. The method of any one of claims 1 to 3, further comprising connecting communication with the second electronic device through a device to device (D2D) communication network,
wherein transmitting the encrypted file comprises transmitting the encrypted file to the second electronic device through the D2D communication network.

5. The method of claim 4, wherein the D2D communication network is different from a network for communication with the server.

6. The method of claim 4, wherein generating the security channel comprises generating the security channel for generating the blockchain while connecting the communication with the second electronic device through the D2D communication.

7. The method of claim 4, wherein generating the security channel comprises generating the security channel for generating the blockchain after disconnecting the connection of the D2D communication network between the first electronic device and the second electronic device.

8. The method of claim 4, wherein recording the generated transaction information on the blockchain ledger comprises recording the generated transaction information on the blockchain ledger while connecting the communication with the second electronic device through the D2D communication.

9. The method of claim 4, wherein recording the generated transaction information on the blockchain ledger comprises recording the generated transaction information on the blockchain ledger after disconnecting the connection of the D2D communication between the first electronic device and the second electronic device.

10. The method of any one of claims 1 to 3, wherein the transaction information comprises at least one of the transmission time, an expiration time of sharing of the file, a link address of the encrypted content, or an identification value of a decryption key for decrypting the encrypted content.

11. A first electronic device (110, 1301) comprising:
a first communication interface (112-1, 1390);
a second communication interface (112-2, 1390);
a memory (111, 1330) configured to store instructions; and
a processor (113, 1320),
wherein, when being executed by the processor, the instructions cause the first electronic device to:
select a second electronic device registered at a server 130 for a secure sharing service;
identify whether a network state and a system time setting of the second electronic device 120 satisfy a predetermined criterion for the secure sharing service;
encrypt a file;
transmit the encrypted file to the second electronic device;
generate a security channel for generating a blockchain for the secure sharing service with the second electronic device in response to the predetermined criterion being satisfied;
generate transaction information related to the encrypted file transmitted to the second electronic device; and
record the generated transaction information on a blockchain ledger of the blockchain through the security channel,
wherein the blockchain ledger contains information for the second electronic device to decrypt the encrypted file.

12. The first electronic device of claim 11, wherein a private number of the first electronic device registered at the server and a private number of the second electronic device registered at the server are shared between the first electronic device and the second electronic device,
wherein, when being executed by the processor, the instructions cause the first electronic device to select the second electronic device based on the private number of the second electronic device, and
wherein the transaction information comprises at least one of the transmission time, an expiration time of sharing of the file, a link address of the encrypted content, or an identification value of a decryption key for decrypting the encrypted content.

13. The first electronic device of any one of claims 11 and 12, wherein, when being executed by the processor, the instructions cause the first electronic device to identify whether a network function of the second electronic device for communication with the server is activated, and whether the system time of the second electronic device is synchronized with a reference time.

14. The first electronic device of any one of claims 11 to 13, wherein, when being executed by the processor, the instructions cause the electronic device to connect communication with the second electronic device through a device to device (D2D) communication network, and to transmit the encrypted file to the second electronic device through the D2D communication network.

15. The first electronic device of claim 14, wherein the D2D communication network is different from a network for communication with the server, and
wherein the processor is configured to execute the instructions to generate the security channel for generating the blockchain while connecting the communication with the second electronic device through the D2D communication.
